(19) **Europäisches Patentamt / European Patent Office / Office européen des brevets**

(11) **EP 2 856 323 B1**

(12) **FASCICULE DE BREVET EUROPEEN**

(45) Date de publication et mention
de la délivrance du brevet:
**21.04.2021 Bulletin 2021/16**

(21) Numéro de dépôt: **13728481.6**

(22) Date de dépôt: **24.05.2013**

(51) Int Cl.:
*G06F 12/0813* (2016.01)    *G06F 12/0815* (2016.01)

(86) Numéro de dépôt international:
**PCT/FR2013/051139**

(87) Numéro de publication internationale:
**WO 2013/175138 (28.11.2013 Gazette 2013/48)**

(54) **PROCÉDÉ, DISPOSITIF ET PROGRAMME D'ORDINATEUR DE CONTRÔLE DYNAMIQUE DE DISTANCES D'ACCÈS MÉMOIRE DANS UN SYSTÈME DE TYPE NUMA**

VERFAHREN, VORRICHTUNG UND COMPUTERPROGRAMM ZUR DYNAMISCHEN ÜBERWACHUNG VON SPEICHERZUGRIFFSABSTÄNDEN IN EINEM NUMA-SYSTEM

METHOD, DEVICE AND COMPUTER PROGRAM FOR DYNAMIC MONITORING OF MEMORY ACCESS DISTANCES IN A NUMA TYPE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2012 FR 1254873**

(43) Date de publication de la demande:
**08.04.2015 Bulletin 2015/15**

(73) Titulaire: **Bull SAS**
**78340 Les Clayes-sous-Bois (FR)**

(72) Inventeurs:
• **MENYHART, Zoltan**
  **38100 Grenoble (FR)**
• **TEMPORELLI, Frédéric**
  **38130 Echirolles (FR)**
• **WELTERLEN, Benoit**
  **38000 Grenoble (FR)**

(74) Mandataire: **Argyma**
**14 Boulevard de Strasbourg**
**31000 Toulouse (FR)**

(56) Documents cités:
**US-A- 6 167 437     US-A1- 2005 033 948**
**US-A1- 2007 083 728     US-A1- 2007 214 333**
**US-A1- 2009 077 436     US-B2- 7 500 067**

• **SANTIAGO DEL RIO P M ET AL: "On the processing time for detection of Skype traffic", WIRELESS COMMUNICATIONS AND MOBILE COMPUTING CONFERENCE (IWCMC), 2011 7TH INTERNATIONAL, IEEE, 4 juillet 2011 (2011-07-04), pages 1784-1788, XP031925879, DOI: 10.1109/IWCMC.2011.5982805 ISBN: 978-1-4244-9539-9**

EP 2 856 323 B1

**Description**

La présente invention concerne la gestion de processus dans des systèmes informatiques comprenant plusieurs unités de traitement et plus particulièrement un procédé, un dispositif et un programme d'ordinateur de contrôle dynamique de distances d'accès mémoire dans un système à accès

mémoire non uniforme, de type NUMA. Dans le contexte technique des systèmes à accès mémoire non uniforme, le document US 2007/214333 A1 décrit un procédé de mise à jour dynamique de la distance NUMA dans une table d'information, le docuement US 2007/083728 A1 décrit une architecture NUMA allouant des ressources mémoire afin de réduire le délai d'accès à la mémoire en utilisant la table d'informations de localisation système SLIT, le document US 2005/033948 A1 décrit un système informatique collectant des information de localité à l'initialisation du système, et le document US 2009/077436 A1 décrit un système permettant de mémoriser des paramètres relatifs à un module mémoire dans une mémoire programmable non volatile.

Le calcul haute performance, aussi appelé HPC (sigle de *High Performance Computing* en terminologie anglo-saxonne), se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters (parfois traduit « *grappes de serveurs* »). Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est, par exemple, réalisée à l'aide de liens de communication Ethernet et de réseaux d'interconnexions (par exemple *Infiniband*) (Ethernet et *Infiniband* sont des marques).

Typiquement, chaque nœud comprend un processeur, de la mémoire de travail et un ou plusieurs modules d'entrée/sortie. Un processeur est ici défini comme un système électronique discret constitué d'une ou plusieurs unités de traitement, aussi appelées coeurs (*core* en terminologie anglo-saxonne), situées sur un même substrat de semi-conducteur. Un processeur dispose d'un contrôleur mémoire qui lui permet d'accéder à de la mémoire de travail ou mémoire vive qui lui est directement attachée, généralement appelée mémoire locale. Le processeur peut accéder à cette mémoire locale par plusieurs contrôleurs mémoire. L'accès à la mémoire locale est caractérisé par des temps de latence très court, typiquement de l'ordre de 70ns, et des débits élevés, typiquement de l'ordre de 30Go/s.

Plusieurs nœuds peuvent être agencés au sein d'un même système informatique, par exemple sous forme d'une lame (appelée *blade* en terminologie anglo-saxonne), offrant des caractéristiques spécifiques, notamment en termes d'accès mémoire lorsque plusieurs processeurs disposent chacun d'une mémoire locale.

Des échanges de données entre processeurs appartenant à un même système informatique peuvent être réalisés par des bus d'interconnexion. A titre d'illustration, les bus d'interconnexion mis en œuvre dans la technologie Intel sont appelés *Quick Path Interconnect* ou QPI et les bus d'interconnexion mis en œuvre dans la technologie AMD sont appelés *HyperTransport* ou HT (Intel et AMD sont des marques). Ces bus d'interconnexion sont caractérisés par des temps de latences élevés, par exemple de l'ordre de 140ns, et une bande passante limitée, par exemple de l'ordre 12Go/s.

Pour un processeur, il est généralement plus rapide d'accéder à la mémoire locale qui lui est associée qu'à une mémoire locale associée à un autre processeur. En effet, ce dernier type d'accès est réalisé via le bus d'interconnexion qui présente souvent des temps de latences plus élevés et un débit plus limité que ceux des liens directs entre un processeur et une mémoire locale associée. Cette caractéristique d'accès aux différentes mémoires d'un système informatique, non uniforme, est qualifiée de NUMA (acronyme de *Non-Uniform Memory Access* en terminologie anglo-saxonne).

Il est possible de définir une distance d'accès mémoire, ou distance NUMA, entre un processeur et une mémoire. Une telle distance correspond à un ratio entre le temps de latence d'accès à la mémoire locale du processeur et le temps de latence d'accès à la mémoire considérée. Un coefficient multiplicateur de dix et un arrondi sont appliqués à ce ratio afin qu'il soit exprimé sous la forme d'un nombre entier.

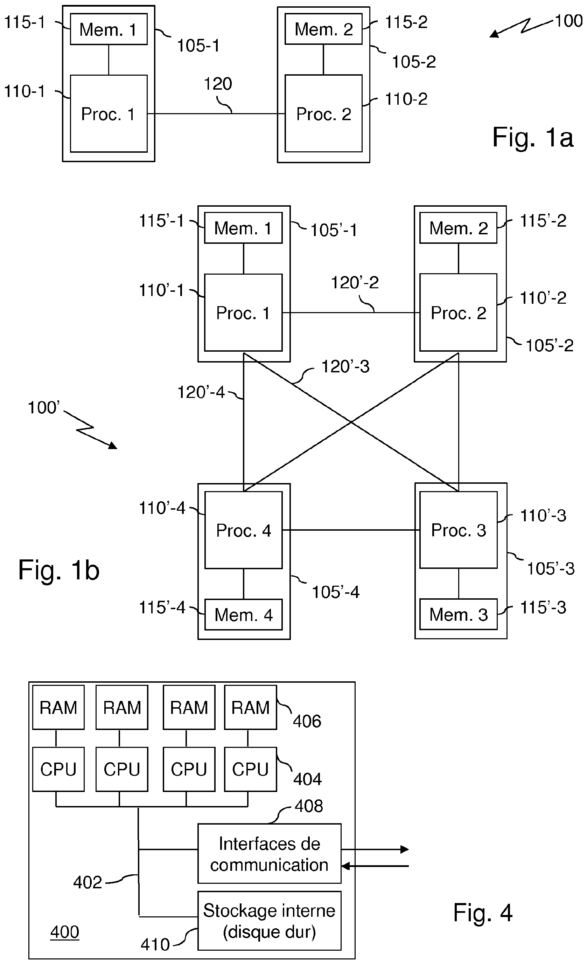

La figure 1, comprenant les figures 1a et 1b, illustre un exemple de système informatique de type NUMA comprenant ici deux processeurs et quatre processeurs, respectivement.

Le système informatique 100 illustré sur la figure 1a comprend un premier nœud 105-1 ayant un processeur référencé 110-1 auquel est associée une mémoire locale référencée 115-1. Il comprend également un second nœud 105-2 ayant un processeur référencé 110-2 auquel est associée une mémoire locale référencée 115-2. Les processeurs 110-1 et 110-2 sont reliés par un bus d'interconnexion 120. Ce dernier est bidirectionnel.

Si le temps de latence d'un cœur du processeur 110-1 pour accéder à la mémoire locale 115-1 est égale à une valeur $T1$ et si le temps de latence du même cœur du processeur 110-1 pour accéder à la mémoire locale 115-2 est égale à une valeur $T2$, la distance NUMA ($dist_{NUMA}$) entre le nœud 105-1 et le nœud 105-2 est généralement définie par la relation suivante :

$$dist_{NUMA} = IP(\frac{10 \times T2}{T1})$$

où $IP$ représente une fonction retournant la partie entière d'un nombre réel. Par abus de langage, il est souvent dit que cette valeur représente la distance NUMA du processeur 110-1 à la mémoire 115-2 et également la distance NUMA du processeur 110-1 au processeur 110-2.

Le système informatique 100' illustré sur la figure 1b comprend quatre nœuds référencés 105'-1 à 105'-4, disposant chacun d'un processeur 110'-1 à 110'-4, respectivement, et d'une mémoire locale 115'-1 à 115'-4, respectivement. Comme illustré, chaque processeur est relié aux trois autres processeurs par un bus d'interconnexion bidirectionnel. Les bus d'interconnexion mis en œuvre peuvent être identiques ou différents. Ainsi, par exemple, les bus d'interconnexion 120'-2, 120'-3 et 120'-4 peuvent être identiques. Alternativement, les bus d'interconnexion 120'-2 et 120'-4 peuvent être identiques mais différents du bus d'interconnexion 120'-3.

Les distances NUMA d'un système informatique peuvent être représentées sous la forme d'une matrice carrée, diagonale si chaque bus d'interconnexion est symétrique (c'est-à-dire si ses caractéristiques sont indépendantes du sens de communication). Dans cette matrice, chaque ligne représente un nœud (différent) de l'ensemble des nœuds du système informatique. De même, chaque colonne représente un nœud (différent) de l'ensemble des nœuds du système informatique. Chaque valeur de la matrice représente ainsi la distance NUMA entre le processeur du nœud associé à la ligne à laquelle appartient la valeur considérée et la mémoire associée au nœud correspondant à la colonne à laquelle appartient la valeur considérée. La matrice des distances NUMA du système informatique représentée sur la figure 1b peut ainsi être représentée sous la forme suivante :

$$dist_{NUMA} = \begin{pmatrix} dist_{NUMA1,1} & dist_{NUMA1,2} & dist_{NUMA1,3} & dist_{NUMA1,4} \\ dist_{NUMA2,1} & dist_{NUMA2,2} & dist_{NUMA2,3} & dist_{NUMA2,4} \\ dist_{NUMA3,1} & dist_{NUMA3,2} & dist_{NUMA3,3} & dist_{NUMA3,4} \\ dist_{NUMA4,1} & dist_{NUMA4,2} & dist_{NUMA4,3} & dist_{NUMA4,4} \end{pmatrix}$$

où $dist_{NUMAi,j}$ représente la distance NUMA entre le processeur du nœud $i$ et la mémoire locale associée au nœud $j$.

A titre d'illustration, les valeurs des distances NUMA du système informatique représentée sur la figure 1b peuvent être les suivantes :

$$dist_{NUMA} = \begin{pmatrix} 10 & 16 & 22 & 22 \\ 16 & 10 & 16 & 22 \\ 22 & 16 & 10 & 16 \\ 22 & 22 & 16 & 10 \end{pmatrix}$$

Les distances NUMA sont typiquement utilisées par le système d'exploitation mis en œuvre afin d'optimiser les allocations de mémoire, pour un programme en cours d'exécution sur un cœur, en favorisant l'utilisation de la mémoire locale liée aux processeurs les plus proches de ce cœur (à commencer par la mémoire locale du processeur auquel ce cœur appartient).

Actuellement, les distances NUMA entre tous les processeurs d'un même système informatique sont déterminées par le constructeur de ce système. Elles sont mémorisées dans une mémoire dite morte, typiquement une mémoire de type EPROM (acronyme d'*Erasable Programmable Read Only Memory* en terminologie anglo-saxonne) ou EEPROM (acronyme d'*Electrically-Erasable Programmable Read-Only Memory* en terminologie anglo-saxonne) conformément à une description standardisée appelée ACPI (sigle d'*Advanced Configuration and Power Interface* en terminologie anglo-saxonne), faisant partie de l'ensemble des fonctions élémentaires appelé BIOS (acronyme de *Basic Input/Output System* en terminologie anglo-saxonne) de la machine considérée. Plus précisément, ces distances sont définies dans une table appelée SRAT (acronyme de *Static Resource Affinity Table* en terminologie anglo-saxonne) qui définit les composantes de chaque nœud et une table appelée SLIT (acronyme de *System Locality Information Table* en terminologie anglo-saxonne) qui définit les distances entre les processeurs.

Par ailleurs, les systèmes d'exploitation actuels reposent sur les informations ACPI données par le constructeur, sans fournir de moyen de modifier, le cas échéant, les distances NUMA. Pour résoudre un tel besoin, un utilisateur doit requérir auprès du constructeur du système informatique un BIOS avec des distances NUMA particulières ou développer son propre système BIOS, enregistrer ce nouveau BIOS dans la mémoire morte du système et enfin redémarrer le système pour que le système d'exploitation puisse prendre en compte les distances NUMA ainsi modifiées.

De tels systèmes informatiques ne donnent pas entière satisfaction. En effet, les inventeurs ont observé que les distances NUMA correspondent à des valeurs théoriques définies par les constructeurs de processeurs et non, dans de nombreux cas, aux distances effectivement déterminées durant des phases de mise au point ou d'engineering ni à la réalité suite à une évolution du matériel mis en œuvre, par exemple l'utilisation de processeurs modifiant le comportement de bus d'interconnexion ou disposant d'accès plus rapide à une mémoire locale.

L'invention permet de résoudre au moins un des problèmes exposés précédemment.

L'invention a ainsi pour objet un procédé de contrôle dynamique de distances d'accès mémoire dans un système à accès mémoire non uniforme mettant en œuvre un système d'exploitation et comprenant une pluralité de processeurs, une mémoire locale étant associée à chaque processeur de ladite pluralité de processeurs, ce procédé comprenant une étape d'obtention d'au moins une distance d'accès mémoire entre au moins un premier processeur de ladite pluralité de processeurs et une mémoire locale associée à au moins un second processeur de ladite pluralité de processeurs et une étape de mémorisation de ladite au moins une distance d'accès mémoire obtenue à la place d'au moins une distance d'accès mémoire, préalablement mémorisée, entre ledit au moins un premier processeur et ladite mémoire locale associée audit au moins un second processeur, ladite au moins une distance d'accès mémoire mémorisée étant directement utilisable par ledit système d'exploitation.

Le procédé selon l'invention permet ainsi de modifier dynamiquement une ou plusieurs distances d'accès mémoire, typiquement une ou plusieurs distances NUMA, sans nécessiter la reprogrammation des fonctions élémentaires (BIOS) ni le redémarrage d'éléments du système à accès mémoire non uniforme. En d'autres termes, il permet, en particulier, de modifier dynamiquement des distances NUMA connues par un système d'exploitation et adapter le comportement du système d'exploitation suivant ces modifications.

Selon un mode de réalisation particulier, le procédé comprend en outre une étape de modification d'au moins une distance d'accès mémoire, préalablement mémorisée, entre ledit au moins un premier processeur et ladite mémoire locale associée audit au moins un second processeur par ladite au moins une distance d'accès mémoire obtenue, dans au moins un secteur ou une zone d'au moins une mémoire locale associée à un processeur de ladite pluralité de processeurs. La modification d'une ou plusieurs distances d'accès mémoire est ainsi réalisée en plusieurs phases.

Selon l'invention, l'étape de mémorisation est au moins partiellement mise en œuvre par une fonction à appel différé appelé par une commande d'écriture dans une interface prédéterminée d'un noyau dudit système d'exploitation, ladite interface predeterminee dudit noyau dudit systeme d'exploitation étant définie dans un système de fichiers. Le procédé selon l'invention est ainsi simple à mettre en œuvre et fondé sur des mécanismes existants.

Toujours selon un mode de réalisation particulier, ladite au moins une distance d'accès mémoire obtenue est obtenue sous forme de chaîne de caractères, le procédé comprenant en outre une étape de décomposition de ladite chaîne de caractères et de construction d'une table de distance, ladite table comprenant au moins ladite au moins une distance d'accès mémoire obtenue.

Ladite au moins une distance d'accès mémoire préalablement mémorisée est avantageusement mémorisée dans une structure prédéterminée dudit système d'exploitation, facilitant la gestion de ces distances et la mise en œuvre de l'invention.

Lesdites étapes d'obtention d'au moins une distance d'accès mémoire et de mémorisation de ladite au moins une distance d'accès mémoire obtenue peuvent être initiées par un utilisateur, un processus exécuté par ledit système d'exploitation ou un système tiers.

Ledit système d'exploitation est, dans l'invention, un système d'exploitation de type Linux.

L'invention a également pour objet un programme d'ordinateur comprenant des instructions adaptées à la mise en œuvre de chacune des étapes du procédé décrit précédemment lorsque ledit programme est exécuté sur un ordinateur ainsi qu'un dispositif comprenant des moyens adaptés à la mise en œuvre de chacune des étapes de ce procédé.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :

- la figure 1, comprenant les figures 1a et 1b, illustre un exemple de système informatique de type NUMA comprenant ici deux processeurs et quatre processeurs, respectivement ;
- la figure 2 illustre schématiquement certaines étapes permettant de modifier dynamiquement des distances NUMA utilisées par un système d'exploitation tel que Linux ;

- la figure 3, comprenant les figure 3a et 3b, illustre un exemple de modification dynamique de distances NUMA dans un système informatique tel que celui décrit en référence à la figure 1b ; et
- la figure 4 illustre un système informatique adapté à mettre en œuvre l'invention, notamment les étapes décrites en référence à la figure 2.

L'invention a généralement pour objet la modification dynamique des distances NUMA utilisées par un système d'exploitation dans un système informatique donné afin, notamment, de modifier les allocations de mémoire et la localisation des processus, selon la configuration réelle du système informatique.

De telles modifications de distances NUMA peuvent en outre être effectuées à titre expérimental ou dans des contextes spécifiques.

Il est observé ici que la modification des distances NUMA requiert typiquement la mise à jour des tables SRAT et SLIT et, par conséquent, nécessite la modification de la mémoire morte du système informatique, par exemple le remplacement de l'EPROM ou reprogrammation de l'EEPROM utilisé, qui est une opération complexe et nécessitant le redémarrage du système d'exploitation pour que la modification soit prise en compte.

Les tables SRAT et SLIT sont lues par le système d'exploitation mis en œuvre, lors de sont initialisation, et les distances NUMA sont copiées dans une structure en mémoire vive.

Pour le système d'exploitation Linux (Linux est une marque), cette structure est un des composants du noyau et est un tableau unidimensionnel de valeurs entières nommé *numa_distance,* d'une taille de [*N* x *N* ] éléments pour un système comprenant *N* nœuds. La distance NUMA du nœud *i* au nœud *j* est la valeur localisée à l'emplacement [ *i* x *N* + *j* ] de ce tableau (les valeurs *i* et *j* étant indexées depuis 0). Les valeurs entières stockées dans ce tableau sont chargées depuis les tables ACPI du BIOS, au démarrage du système d'exploitation, lors de l'initialisation du noyau.

Il est noté ici que le système d'exploitation Linux fait référence à différents type de mémoires, suivant des considérations d'utilisation et d'implémentation physique, mis en œuvre par un concept de zones mémoires par nœud. A titre d'illustration, un nœud dispose de zones de mémoire dédiées aux échanges avec des périphériques (par exemple de type DMA et DMA32, DMA étant le sigle de *Direct Memory Access* en terminologie anglo-saxonne), de zones de mémoire localisées en partie haute de l'espace d'adressage (appelée HIGH_MEMORY en terminologie anglo-saxonne), de zones de mémoire pouvant être déplacées dans l'espace d'adressage (appelée MOVABLE en terminologie anglo-saxonne) ou encore de zone de mémoire pour un usage normal (appelée NORMAL en terminologie anglo-saxonne). Il est également noté que le système d'exploitation Linux utilise un mécanisme de gestion de mémoire basé sur la pagination (un tel mécanisme permet, en particulier, de mettre en œuvre des mécanismes dits de mémoire virtuelles).

Lors de l'initialisation du noyau, le système d'exploitation Linux construit, pour chaque nœud disposant de mémoire, un sous-système indépendant de gestion de mémoire, avec ses propres listes de pages libres et pages utilisées, les statistiques et les mécanismes de verrouillage pour arbitrer les accès. De plus, le système d'exploitation Linux construit pour chaque zone mémoire une liste ordonnée de zones appelée « *zonelist* ». Une *zonelist* spécifie les zones et nœuds à utiliser lorsque la zone et le nœud sélectionné ne peuvent plus satisfaire les besoins d'allocation, en se basant sur le contenu de la table *numa_distance* préalablement chargée.

Avec le noyau du système d'exploitation Linux, sans modification particulière, il est possible d'accéder aux valeurs de la table de distance NUMA *numa_distance,* en lecture seule, en utilisant le système de fichiers *sysfs* et la commande *cat*, lorsque le système d'exploitation mis en œuvre est Linux.

Il est ici rappelé que le système de fichiers *sysfs* est un système de fichiers virtuels géré par le noyau du système d'exploitation et permettant à l'utilisateur, sous conditions de privilèges d'accès, de disposer, sous la forme d'une arborescence, d'interfaces avec ce noyau. Ainsi, via le système de fichiers *sysfs,* les distances NUMA d'un nœud *K* peuvent être obtenues avec la commande suivante :

*cat /sys/devices/system/node/node<K>/distance*

Cette commande affiche sur une ligne la distance entre le nœud *K* et chacun des nœuds du système. De manière plus globale, il est possible d'utiliser la commande suivante :

*cat/sys/devices/system/node/\*/distance*

Dans ce cas, le caractère « * » permet d'interroger le système de fichier *sysfs* pour l'ensemble des nœuds du système. La commande affiche alors, pour chacun des nœuds, les distances avec chacun des nœuds du système. En d'autres termes, cette commande permet l'affichage de la table des distances NUMA du système.

La commande connue sous le nom de *numactl* fournit une fonctionnalité équivalente.

Pour modifier dynamiquement les distances NUMA conformément à mode de réalisation de l'invention, dans un système comprenant *N* nœuds, le noyau du système d'exploitation peut être modifié afin, notamment, de :

- bénéficier de l'interfaces du système de fichier *sysfs,* déjà existante pour la lecture des distances NUMA d'un nœud *K,* pour rendre l'écriture possible dans l'entrée *sysfs /sys/devices/system/node/node<K>/distance* et permettre la saisie sous forme d'une chaine de caractères des distances entre ce nœud *K* et chaque nœud du système. Il est noté ici que la modification de la table de distances NUMA se fait avantageusement par modifications successives des distances pour chacun des nœuds;

- créer une fonction appelée ici « *node_write_dist* » à appel différé qui est appelée après qu'une telle écriture ait été réalisée, pour modifier les distances NUMA de ce nœud *K*. Il est rappelé ici qu'une fonction à appel différé est une fonction qui est exécutée par le système d'exploitation dans le but de traiter les informations associées à un événement après que cet événement soit survenu. Un exemple d'une telle fonction est donné en annexe (Code 1) ;

- créer une fonction de traitement de chaîne de caractères appelée ici « *node_parse_dist* » afin de traiter la chaîne de caractères contenant les nouvelles distances NUMA du nœud *K,* pour obtenir ces distances sous une forme numérique, telle un tableau de distances, chaque distance étant dans un format d'entier numérique qui peut être directement inséré dans la table de distances du noyau. Cette fonction est, de préférence, appelée par la fonction « *node_write_dist* » ;

- créer une fonction, appelée ici « *numa_set_dist* », pour modifier les valeurs dans la structure *numa_distance* du noyau dans laquelle sont mémorisées les distances NUMA. Cette fonction utilise notamment, comme paramètres, les coordonnées de la distance NUMA à modifier (c'est-à-dire une valeur *K* de nœud en ordonnée et une valeur *L* de nœud en abscisse) ainsi que la nouvelle valeur de cette distance. Avec ces paramètres, la fonction réalise la modification de la distance NUMA ainsi définie dans la table de distances NUMA utilisée par le système d'exploitation. Cette fonction est, de préférence, appelée depuis la fonction « *numa_write_dist* », avec les valeurs numériques issues de l'appel à la fonction « node_parse_dist », via une boucle sur les *N* nœuds du système, ce qui permet de modifier pour le nœud *K* la distance avec tous les nœuds du système ;

- adapter la fonction connue sous le nom de « *build_all_zonelists* » existante dans le noyau du système d'exploitation Linux. En effet, après la modification des distances d'un nœud à d'autres nœuds, l'ordre des listes de zone doit être réévalué pour prendre en compte les valeurs modifiées des distances. A ces fins, la fonction « *build_all_zonelists* », déjà utilisée dans le noyau du système d'exploitation Linux lors de la création des listes de zones, à l'initialisation du système d'exploitation ou lors de la modification à chaud (appelée *hotplug* en terminologie anglo-saxonne) de composants d'un noeud (par exemple l'ajout ou le retrait d'éléments de mémoire) est appelée. Cette fonction est avantageusement appelée par la fonction « *node_write_dist*» après que les nouvelles distances NUMA aient été enregistrées dans la table *numa_distance* du noyau. Un exemple d'une telle fonction est donné en annexe (Code 2) ; et,

- créer des macros permettant des abstractions pour les architectures non NUMA, permettant l'implémentation facile de cette fonctionnalité à d'autres architectures. En effet, le système d'exploitation Linux peut fonctionner sur des machines ne disposant pas de fonctionnalités NUMA. Cet ensemble de macros permet de limiter l'utilisation de l'implémentation d'un mode de réalisation de l'invention à des architectures pouvant la supporter, sans perturber le fonctionnement des machines basées sur d'autres architectures

Par ailleurs, selon le mode de réalisation de l'invention mis en œuvre, il peut être nécessaire de définir un outil pour écrire, via le système de fichiers *sysfs,* les distances NUMA dans l'attribut « *distance* » d'un nœud ou d'un ensemble de nœuds. Il peut être créé un outil simple, par exemple en utilisant un simple script *bash, shell* ou un outil comprenant une interface graphique (GUI, sigle de *Graphical user interface* en terminologie anglo-saxonne). Alternativement, il est possible de modifier un outil existant, par exemple l'outil *numactl.*

L'outil peut également être un système automatique pouvant adapter les distances écrites via le système de fichiers *sysfs* en fonction de paramètres et suivant des algorithmes prédéterminés. Pour illustrer de manière simple la commande permettant à un utilisateur de modifier les distances NUMA pour un nœud *K,* il est possible d'utiliser des commandes basiques d'écriture fournies par les systèmes de commande en ligne du système d'exploitation utilisé, comme la commande *echo.* Il est rappelé ici que la commande *echo* a pour objet l'écriture de données dans le périphérique de console (affichage à l'écran) ou, via une directive de redirection du flux de console vers un fichier, l'écriture de données dans ce fichier. Ainsi, l'utilisation de cette commande permet d'écrire les distances NUMA dans l'attribut des distances NUMA pour le nœud considéré.

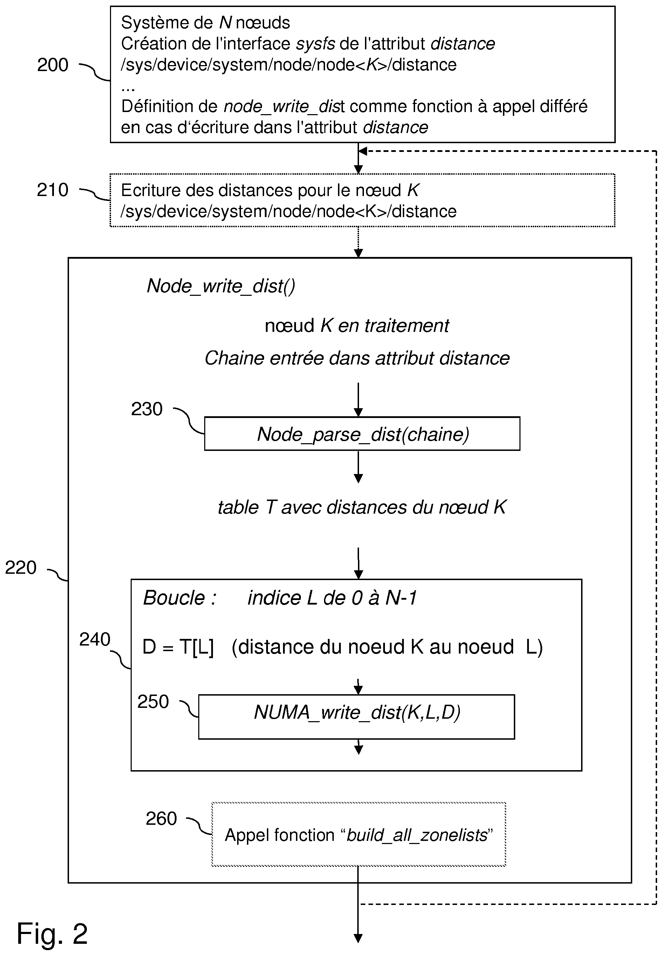

La figure 2 illustre schématiquement certaines étapes permettant de modifier dynamiquement des distances NUMA utilisées par un système d'exploitation tel que Linux.

Comme illustré, une première étape (étape 200) exécutée lors de l'initialisation du noyau, vise ici, dans un système composé de *N* nœuds, la modification de l'attribut « *distance* » d'un nœud dans l'interface du système de fichiers *sysfs* du noyau.

En effet, de façon standard, la lecture de l'attribut */sys/devices/system/node/node<i>/distance* du nœud *i* (*i* étant indexé de 0 à *N*-1) utilise une fonction à appel différé qui réalise l'affichage sur la console des distances NUMA pour ce nœud *i*. Conformément à l'invention, une fonction similaire à appel différé est créée et offre la possibilité d'écriture de cet attribut. Une telle fonction est définie durant l'initialisation du noyau.

Une étape suivante (étape 210) correspond ici à l'écriture de nouvelles valeurs de distances NUMA, en utilisant le système de fichiers *sysfs,* dans l'attribut *distance* du nœud *K,* sous forme d'une chaine de caractère contenant les nouvelles distances de ce nœud *K* avec tous les nœuds du système.

Suite à l'opération d'écriture réalisée durant étape 210, le noyau exécute la fonction « *node_write_dist* » (étape 220) avec des paramètres permettant d'identifier le nœud *K* pour lequel le traitement doit être réalisé ainsi que la chaine de caractères entrée dans l'attribut *distance.*

Comme illustré sur la figure 2, cette fonction appelle une fonction notée *Node_parse_dist(chaine, table)* qui a pour objet de décomposer (*parsing* en terminologie anglo-saxonne) la chaîne de caractères représentative des nouvelles valeurs de distances NUMA en une table unidimensionnelle, notée *T*, de distances dont l'origine est le nœud *K* et la destination est l'ensemble des *N* nœuds (étape 230). Une telle fonction de décomposition utilise ici un algorithme standard de décomposition de chaîne de caractères. A titre d'illustration, les distances sont représentées par des valeurs numériques séparées par des caractères d'espacement dans la chaîne de caractères.

Suite à la transformation de la chaine de caractère en une table *T*, une boucle est effectuée pour mettre à jour la table *numa_distance* (étape 240). A ces fins, une variable *L* représentant un index sur chacun des *N* nœuds du système, variant de 0 à *N*-1, est utilisée. La variable *L* est notamment utilisée pour obtenir la distance *D* du nœud *K* au nœud *L* dans la table *T*. Dans cette même boucle, une fonction notée *numa_write_dist* ayant pour paramètres *(index1, index2, distance)* est appelée (étape 250) pour chaque couple de nœuds indexés par les index *K* et *L*, avec la distance *D*, afin de modifier l'élément correspondant dans la table numa_distance, localisé à l'emplacement [*KxN+L*] par la valeur *D*.

Enfin, la fonction « *build_all_zonelists* » est appelée (étape 260) pour réordonner les listes de zones mémoire de chaque nœuds suivant les nouvelles valeurs des distances du nœud *K*.

Ainsi, par exemple, la chaîne de caractère suivante « 30, 40, 10, 20 », écrite dans l'attribut *distance* du nœud 2, est décomposée pour former la troisième ligne de la table suivante représentant la matrice des distances d'un système,

$$\begin{pmatrix} 10 & 20 & 30 & 40 \\ 40 & 10 & 20 & 30 \\ 30 & 40 & 10 & 20 \\ 20 & 30 & 40 & 10 \end{pmatrix}$$

Comme illustré par l'utilisation de flèches en trait pointillé, les étapes 210 à 260 sont répétées chaque fois que des distances NUMA du système informatique considéré doivent être modifiées, par exemple pour chacun des N nœuds du système.

Par ailleurs, il est observé que les nouvelles distances NUMA peuvent être mémorisées dans un fichier de telle sorte à être chargées à la place des valeurs mémorisées dans les tables SRAT et SLIT suite au redémarrage du système informatique. Une telle mise à jour automatique des distances NUMA à partir de valeurs mémorisées dans un fichier peut être réalisée simplement à l'aide d'un script lancé automatiquement au démarrage du système informatique.

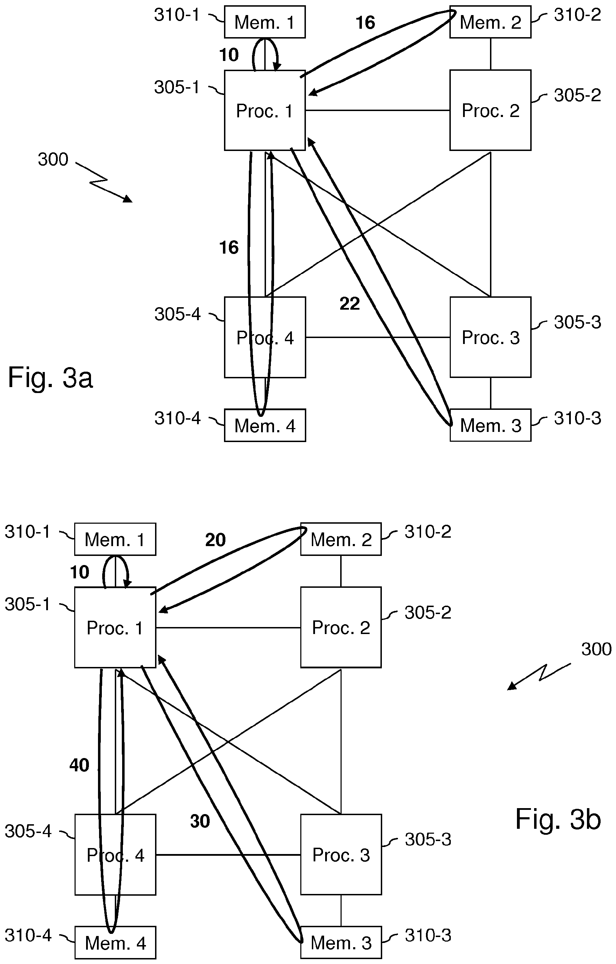

La figure 3, comprenant les figure 3a et 3b, illustre un exemple de modification dynamique de distances NUMA dans un système informatique tel que celui décrit en référence à la figure 1b. Ce système informatique comprend quatre processeurs référencés 305-1 à 305-4 disposant chacun d'une mémoire locale référencée 310-1 à 310-4, respectivement, chaque processeur étant relié aux trois autres par un bus d'interconnexion bidirectionnel.

Lors de l'initialisation du système informatique, les distances NUMA sont celles définies dans les tables SRAT et SLIT, par exemple les valeurs discutées en référence à la figure 1b :

$$dist(init)_{NUMA} = \begin{pmatrix} 10 & 16 & 22 & 22 \\ 16 & 10 & 16 & 22 \\ 22 & 16 & 10 & 16 \\ 22 & 22 & 16 & 10 \end{pmatrix}$$

Ainsi, par exemple, comme illustré sur la figure 3a, la distance NUMA entre le processeur 305-1 et la mémoire locale 310-2 associée au processeur 305-2, comme la distance NUMA entre le processeur 305-1 et la mémoire locale 310-4 associée au processeur 305-4, est égale à 16 tandis que la distance NUMA entre le processeur 305-1 et la mémoire locale 310-3 associée au processeur 305-3 est égale à 22.

Conformément à l'invention, ces distances peuvent être changées sans arrêter les processeurs 305-1 à 305-4 et sans relancer le système d'exploitation. Après avoir obtenu les nouvelles distances NUMA devant être utilisées, par exemple après leur saisie par un utilisateur, elles sont mémorisées dans la structure utilisée par le système d'exploitation pour mémoriser les distances NUMA, typiquement la structure *distance_numa*.

Ces nouvelles distances NUMA sont par exemple les suivantes :

$$dist(new)_{NUMA} = \begin{pmatrix} 10 & 20 & 30 & 40 \\ 40 & 10 & 20 & 30 \\ 30 & 40 & 10 & 20 \\ 20 & 30 & 40 & 10 \end{pmatrix}$$

Après leur mémorisation dans la structure des distances NUMA, la distance NUMA entre le processeur 305-1 et la mémoire locale 310-2 associée au processeur 305-2 est, comme illustré sur la figure 3b, égale à 20, sans que le système d'exploitation n'ait été relancé. De façon similaire, la distance NUMA entre le processeur 305-1 et la mémoire locale 310-3 associée au processeur 305-3 est égale à 30 et la distance NUMA entre le processeur 305-1 et la mémoire locale 310-4 associée au processeur 305-4 est égale à 40.

La figure 4 illustre un système informatique 400 adapté à mettre en œuvre l'invention, notamment les étapes décrites en référence à la figure 2, comprenant ici plusieurs processeurs, des mémoires locales ainsi qu'une interface de communication. Plus précisément, le système informatique 400 comporte ici un bus de communication 402, par exemple un bus d'interconnexion, auquel sont reliés :

- des unités centrales de traitement ou processeurs 404 (ou CPU, sigle de *Central Processing Unit* en terminologie anglo-saxonne) ;
- des composants de mémoire vive 406 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive est ici associé à un processeur) ; et,
- des interfaces de communication 408 adaptées à transmettre et à recevoir des données.

Le système informatique 400 dispose en outre ici de moyens de stockage interne 410, tels que des disques durs, pouvant notamment comporter le code exécutable de programmes.

Le bus de communication 402 permet la communication et l'interopérabilité entre les différents éléments inclus dans le système informatique 400 ou reliés à lui. Les processeurs 404 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 406.

Naturellement, pour satisfaire des besoins spécifiques, une personne compétente dans le domaine de l'invention pourra appliquer des modifications dans la description precedente.

ANNEXE

```
static ssiza_t node_write_dist(struct sys_device * dev, struct sysdev_attribute *attr,
                                const char *buf, size_t count)
{
    int nid = dev->id;
    int *distances;

    BUILD BUG_ON(MAX NUMNODES * 4 > PAGE SIZE);
    distances = vmalloc(MAX_NUMNODES * sizeof(int));

    node_distance_parse ( buf, distances);
    node_change_distance(nid,distances);
    vfree(distances) ;

    return count;
}

static void node_change_distance(int nid, int* distances)
{
    int i;
    for each_online node(i)
        numa_change_distance (nid, i, distances [i]);
}
```

## Code 1: *node_write_dist*

```
void _ref build_all_zonelists(void *data)
{
    set_zonelist_order();

    if (system_state == SYSTEM_BOOTING) {
        _build_all_zonelists (NULL) ;
        mminit_verify_zonelist();
        cpuset_init_current_mems_allowed();
    } else {
        /* all cpus are preferably stops to guarantee there is no user of zonelist */
#ifdef CONFIG_MEMORY_HOTPLUG
        if (data)
            setup_zone_pageset( (struct zone *)data);
#endif
        stop_machine( __ build_all_zonelists, NULL, NULL);
        /* cpu set refresh routine should be here */
    }
    vm_total_pages = nr_free_pagecache_pages();
    if (vm_total_pages < (pageblock_nr_pages * MIGRATE_TYPES))
```

```
            page_group_by_mobility_disabled = 1;
        else
            page_group_by_mobility_disabled = 0;
        printk( "Built %i zonelists in %s order, mobility grouping %s. "
            "Total pages: %ld\n",
                nr_online_nodes,
                zonelist_order_name[current_zonelist_order],
                page_group_by_mobility_disabled ? "off" : "on",
                vm_total_pages) ;
#ifdef CONFIG_NUMA
        printk( "Policy zone: %s\n", zone_names [policy_zone]);
#endif
}
```

<u>Code 2 : *build_all_zonelists*</u>

**Revendications**

1. Procédé de contrôle dynamique de distances d'accès mémoire dans un système à accès mémoire non uniforme mettant en œuvre un système d'exploitation de type Linux et comprenant une pluralité de processeurs (305-1 à 305-4), une mémoire locale (310-1 à 310-4) étant associée à chaque processeur de ladite pluralité de processeurs, ce procédé étant **caractérisé en ce qu'**il comprend une étape d'obtention (210) d'au moins une distance d'accès mémoire selon la configuration réelle du système entre au moins un premier processeur de ladite pluralité de processeurs et une mémoire locale associée à au moins un second processeur de ladite pluralité de processeurs et une étape de mémorisation (220) de ladite au moins une distance d'accès mémoire obtenue à la place d'au moins une distance d'accès mémoire, préalablement mémorisée, entre ledit au moins un premier processeur et ladite mémoire locale associée audit au moins un second processeur, ladite au moins une distance d'accès mémoire mémorisée étant directement utilisable par ledit système d'exploitation, le procédé étant **caractérisé en ce que** ladite étape de mémorisation est au moins partiellement mise en œuvre par une fonction à appel différé appelé par une commande d'écriture dans une interface prédéterminée d'un noyau dudit système d'exploitation et selon lequel ladite interface prédéterminée dudit noyau dudit système d'exploitation est définie dans un système de fichiers.

2. Procédé selon la revendication 1 comprenant en outre une étape de modification d'au moins une distance d'accès mémoire, préalablement mémorisée, entre ledit au moins un premier processeur et ladite mémoire locale associée audit au moins un second processeur par ladite au moins une distance d'accès mémoire obtenue, dans au moins un secteur ou une zone d'au moins une mémoire locale associée à un processeur de ladite pluralité de processeurs.

3. Procédé selon l'une quelconque des revendications 1 et 2 selon lequel ladite au moins une distance d'accès mémoire obtenue est obtenue sous forme de chaîne de caractères, le procédé comprenant en outre une étape de décomposition de ladite chaîne de caractères et de construction (230) d'une table de distance, ladite table comprenant au moins ladite au moins une distance d'accès mémoire obtenue.

4. Procédé selon l'une quelconque des revendications précédentes selon lequel ladite au moins une distance d'accès mémoire préalablement mémorisée est mémorisée dans une structure prédéterminée dudit système d'exploitation.

5. Procédé selon l'une quelconque des revendications précédentes selon lequel lesdites étapes d'obtention d'au moins une distance d'accès mémoire et de mémorisation de ladite au moins une distance d'accès mémoire obtenue sont initiées par un utilisateur, un processus exécuté par ledit système d'exploitation ou un système tiers.

6. Programme d'ordinateur comprenant des instructions adaptées à la mise en œuvre de chacune des étapes du procédé selon l'une quelconque des revendications précédentes lorsque ledit programme est exécuté sur un ordinateur.

7. Dispositif comprenant des moyens adaptés à la mise en œuvre de chacune des étapes du procédé selon l'une quelconque des revendications 1 à 5.

**Patentansprüche**

1. Verfahren zur dynamischen Überwachung von Speicherzugriffsabständen in einem System mit nicht gleichmäßigem Speicherzugriff, das ein Betriebssystem vom Typ Linux umsetzt und eine Vielzahl von Prozessoren (305-1 bis 305-4) umfasst, wobei jedem Prozessor von der Vielzahl von Prozessoren ein lokaler Speicher (310-1 bis 310-4) zugeordnet ist, wobei dieses Verfahren **dadurch gekennzeichnet ist, dass** es einen Schritt des Erhaltens (210) von mindestens einem Speicherzugriffsabstand gemäß der realen Konfiguration des Systems zwischen mindestens einem ersten Prozessor der Vielzahl von Prozessoren und einem lokalen Speicher, der mindestens einem zweiten Prozessor der Vielzahl von Prozessoren zugeordnet ist, und einen Schritt des Speicherns (220) des mindestens einen erhaltenen Speicherzugriffsabstands anstelle von mindestens einem zuvor gespeicherten Speicherzugriffsabstand zwischen dem mindestens einen ersten Prozessor und dem lokalen Speicher, der dem mindestens einen zweiten Prozessor zugeordnet ist, umfasst, wobei der mindestens eine gespeicherte Speicherzugriffsabstand von dem Betriebssystem direkt verwendbar ist, wobei das Verfahren **dadurch gekennzeichnet ist, dass** der Schritt des Speicherns mindestens teilweise von einer Funktion mit verzögertem Aufruf umgesetzt wird, der von einem Schreibbefehl in einer vorher festgelegten Schrittstelle eines Kerns des Betriebssystems aufgerufen wird und gemäß dem die vorher festgelegte Schrittstelle des Kerns des Betriebssystems in einem Dateisystem definiert ist.

2. Verfahren nach Anspruch 1, umfassend ferner einen Schritt des Änderns von mindestens einem zuvor gespeicherten Speicherzugriffsabstand zwischen dem mindestens einen ersten Prozessor und dem lokalen Speicher, der dem mindestens einen zweiten Prozessor zugeordnet ist, durch den mindestens einen erhaltenen Speicherzugriffsabstand in mindestens einem Sektor oder einer Zone mindestens eines lokalen Speichers, der einem Prozessor der Vielzahl von Prozessoren zugeordnet ist.

3. Verfahren nach einem der Ansprüche 1 und 2, wobei der mindestens eine erhaltene Speicherzugriffsabstand in Form einer Zeichenkette erhalten wird, wobei das Verfahren ferner einen Schritt des Zerlegens der Zeichenkette und des Aufbauens (230) einer Abstandstabelle umfasst, wobei die Tabelle mindestens den mindestens einen erhaltenen Speicherzugriffsabstand umfasst.

4. Verfahren nach einem der vorangehenden Ansprüche, wobei der mindestens eine zuvor gespeicherte Speicherzugriffsabstand in einer vorher festgelegten Struktur des Betriebssystems gespeichert wird.

5. Verfahren nach einem der vorangehenden Ansprüche, wobei die Schritte des Erhaltens von mindestens einem Speicherzugriffsabstand und des Speicherns des mindestens einen erhaltenen Speicherzugriffsabstands von einem Benutzer, einem von dem Betriebssystem ausgeführten Prozess oder einem Drittsystem initiiert werden.

6. Rechnerprogramm, umfassend Befehle, die für die Umsetzung von jedem der Schritte des Verfahrens nach einem der vorangehenden Ansprüche geeignet sind, wenn das Programm auf einem Rechner ausgeführt wird.

7. Vorrichtung, umfassend Mittel, die für die Umsetzung von jedem der Schritte des Verfahrens nach einem der Ansprüche 1 bis 5 geeignet sind.

**Claims**

1. A method for dynamically controlling memory access distances in a non-uniform memory access system implementing a Linux type operating system and comprising a plurality of processors (305-1 to 305-4), a local memory (310-1 to 310-4) being associated with each processor of said plurality of processors, this method being **characterised in that** it comprises a step of obtaining (210) at least one memory access distance according to the real configuration of the system between at least one first processor of said plurality of processors and a local memory associated with at least one second processor of said plurality of processors and a step of storing (220) said at least one memory access distance obtained instead of at least one previously stored memory access distance, between said at least one first processor and said local memory associated with at least one second processor, said at least one memory access distance stored being directly usable by said operating system, the method being **characterised in that** said storing step is at least partially implemented by a delayed call function called by a writing command in a predetermined interface of a core of said operating system and wherein said predetermined interface of said core of said operating system is defined in a file system.

2. The method according to claim 1, further comprising a step of modifying at least one previously stored memory access distance, between said at least one first processor and said local memory associated with at least one second processor by said at least one memory access distance obtained, in at least one sector or zone of at least one local memory associated with a processor of said plurality of processors.

3. The method according to any of claims 1-2, wherein said at least one memory access distance obtained is obtained as a character string, the method further comprising a step of resolving said character string and constructing (230) a distance table, said table comprising at least said at least one memory access distance obtained.

4. The method according to any of the preceding claims, wherein said at least one memory access distance previously stored is stored in a predetermined structure of said operating system.

5. The method according to any of the preceding claims, wherein said steps of obtaining at least one memory access distance and storing said at least one memory access distance obtained are initiated by a user, a process executed by said operating system or a third party system.

6. A computer program comprising instructions adapted for implementing each of the steps of the method according to any of the preceding claims, when said program is executed on a computer.

7. A device comprising means adapted to implement each of the steps of the method according to any of claims 1 to 5.

Fig. 1a

Fig. 1b

Fig. 4

Système de *N* nœuds
Création de l'interface *sysfs* de l'attribut *distance*
/sys/device/system/node/node<*K*>/distance
...
Définition de *node_write_dist* comme fonction à appel différé
en cas d'écriture dans l'attribut *distance*

200

Ecriture des distances pour le nœud *K*
/sys/device/system/node/node<*K*>/distance

210

*Node_write_dist()*

nœud *K en traitement*

*Chaine entrée dans attribut distance*

230

*Node_parse_dist(chaine)*

*table T avec distances du nœud K*

220

*Boucle :*     *indice L de 0 à N-1*

240   D = T[L]    (distance du noeud K au noeud L)

250   *NUMA_write_dist(K,L,D)*

260   Appel fonction "*build_all_zonelists*"

Fig. 2

Fig. 3a

Fig. 3b

**RÉFÉRENCES CITÉES DANS LA DESCRIPTION**

**Documents brevets cités dans la description**

- US 2007214333 A1
- US 2007083728 A1
- US 2005033948 A1
- US 2009077436 A1